# EUROPEAN PATENT SPECIFICATION

(11) **EP 0 371 019 B1**
(45) Date of publication and mention of the grant of the patent: **10.11.1993**
(21) Application number: 88903783.4
(22) Date of filing: 08.04.1988
(51) Int. Cl.: G03B 17/32

(54) **SHEET-FILM CASSETTE**
BLATTFILMKASSETTE
CASSETTE AVEC FILM EN FEUILLE

(30) Priority: 09.04.1987 DE 3711943
(43) Date of publication of application: 06.06.1990
(73) Proprietor: KODAK AKTIENGESELLSCHAFT, D-70323 Stuttgart (DE); EASTMAN KODAK COMPANY, Rochester, New York 14650-2201 (US)
(72) Inventor: OSWALD, Anton, D-7300 Esslingen (DE)
(74) Representative: Lewandowsky, Klaus, Dipl.-Ing.
(86) International application number: EP8800293
(87) International publication number: WO8808151

(56) References cited:
- EP-A- 0 051 248
- EP-A- 0 065 311

## Description

The invention relates to a sheet-film cassette comprising a first and a second cassette portion connected by a hinge, in the first portion an exposure window and a light-shielding slider with a grip piece being arranged for shifting movement and in the second portion support means being provided for positioning a sheet film, two locking devices associated with the light-shielding slider and arranged in the grip piece thereof and adapted for engagement with one of the cassette portions, one of said locking devices comprising a locking arm mounted to the grip piece and being adapted for locking engagement with the second cassette portion and for being automatically reset when the cassette portions are pivoted to their open position.

In a cassette of this type which has been disclosed in DE-PS 30 40 819, two locking devices are provided for the light-shielding slider, one preventing the light-shielding slider from being inadvertently operated and the other from being operated again after an exposure has been made. However, following exposure, the second locking device has to be manually moved to its operative position so that there exists the danger of the operator forgetting to actuate it and a double-exposure occurring.

It is the object of the invention to design a sheet-film cassette of the generic type such that the danger of double exposure of a sheet film is excluded.

In accordance with the invention this object is attained with the features of the characterising portion of claim 1.

According to a useful modification of the invention, the locking arm is at one end positively mounted in the grip piece by means of mounting pins molded to it on either side. At its other end, the locking arm is provided with a locking nose adapted for engagement with the associated cassette portion.

According to another useful modification of the invention, the control element is guided in a recess adjacent to the locking projection in the lower cassette portion which positions the sheet film.

Advantageously, the locking arm is mounted in a recess of a bottom part of a grip piece consisting of two parts and is covered by the light-shielding slider which is secured between the two parts of said grip piece.

According to still another useful modification of the invention, the control element is provided with a color mark which is visible from outside through an opening of the lower cassette portion and which indicates via the position of the control element the exposure condition of the sheet film.

The design and arrangement of the second locking device as provided by the invention results in that the light-shielding slider cannot be moved again out of its covering position which it has assumed after an exposure so that the danger of double exposure is excluded.

Further features and advantages can be inferred from the description of an embodiment of the invention illustrated in the drawings as well as from the sub-claims.

The drawings show in
- Fig. 1: a plan view of a sheet-film cassette;
- Fig. 2: a rear view (hinge side) of the cassette according to Fig. 1;
- Fig. 3: a sectional view along line C-C in Fig. 1;
- Fig. 4: a sectional view along line B-B in Fig. 1 with the light-shielding slider in its closing position;
- Fig. 5: the device according to Fig. 4 with the light-shielding slider partially extracted;
- Fig. 6: a sectional view along line A-A in Fig. 1 with the light-shielding slider in its closed position;
- Fig. 7: the device according to Fig. 6 with the light-shielding slider partially extracted;
- Fig. 8: the device according to Fig. 6 with the double-exposure lock being operative;
- Fig. 9: a sectional view along line D-D in Fig. 1 with a sheet film loaded in the cassette;
- Fig. 10: the device according to Fig. 9 without a sheet film.

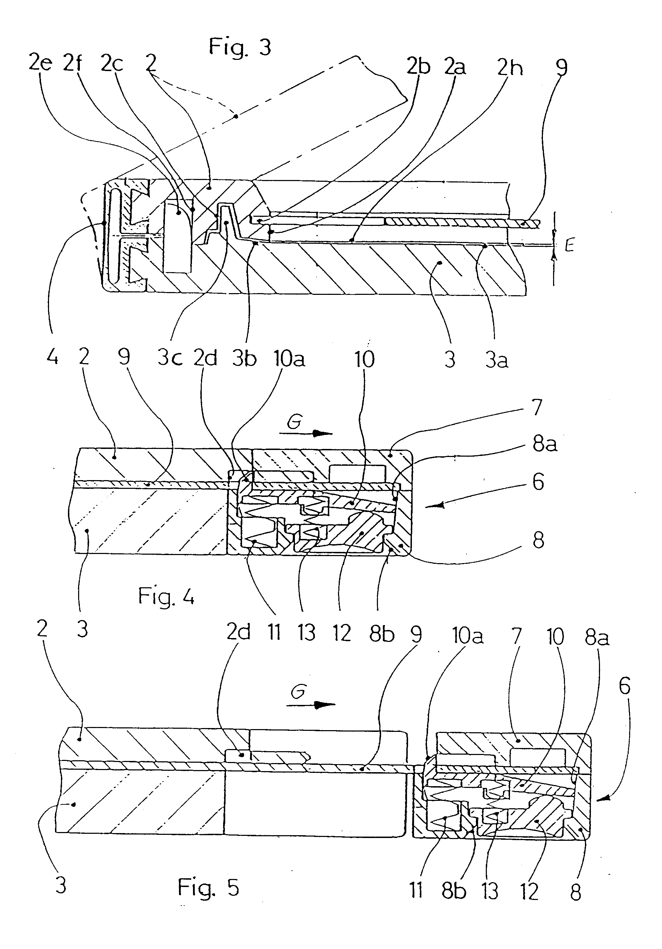

The sheet-film cassette 1 comprises an upper portion 2 and a lower portion 3 which are connected by a flexible hinge 4 secured by a snap fit (see Fig. 3).

The upper portion 2 of cassette 1 can be locked with the lower portion 3 of the cassette by an automatically or manually operated pivotable closing device 5 of a type known per se and not illustrated in detail.

An exposure window 2a which can be closed by a light-shielding slider 9 guided in a guide 2b is arranged in the upper portion 2 of cassette 1.

The lower portion 3 of cassette 1 features a support surface 3a for a sheet film 16 which is completely surrounded by a frame 3c. The two shorter edge sections 3b of support surface 3a are bent upwardly at an angle of about 6°.

Correspondingly designed surface areas 2g of the upper portion 2 of cassette 1 are arranged opposite and parallel to these edge sections 3b. The longer sides of exposure window 2a comprise surface areas 2h running parallel with the support surface 3a.

A space "E" for accommodating a sheet film 16 is provided between the support surface 3a with its two bent-off edge sections 3b of lower portion 3 and the surface areas 2g, 2h of the upper portion 2 extending parallel thereto and surrounding the exposure window 2a.

The bent-off edge sections 2g, 3b of cassette 1 cause the two shorter edge sections of the sheet film 16 to be bent upwardly so that the sheet film is pretensioned in the direction towards the support surface 3a of the lower portion 3 and rests in a plane position on the support surface 3a.

Frame 3c of the lower portion 3, which completely surrounds the film support surface 3a, 3b, is received, as shown in Fig. 3, in a equally endless groove 2c in the upper portion 2 of cassette 1, both the frame and the groove being designed such that they form an interlocking light-tight labyrinth.

On the lower portion 3 of cassette 1, guide elements 2e are provided in the area of the hinge (see Fig. 3), said elements being received in a recess 2f of the upper portion 2 and serving to center the two cassette portions 2 and 3 when they are pivoted to their closed position.

The light-shielding slider 9 has a grip piece 6 on which a first and a seconding locking device for said slider are arranged.

The grip piece, 6 consists of an upper part 7 and a lower part 8 screwed together with said upper part and the interposed light-shielding slider 9.

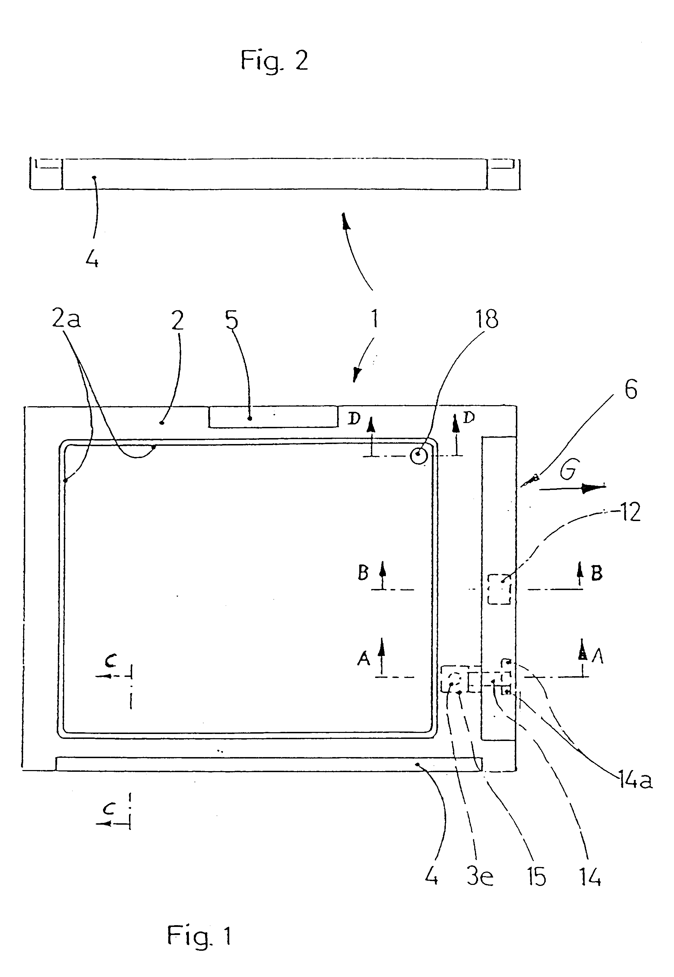

The first locking device according to Figs. 1, 4 and 5 comprises a locking lever 10 which is arranged in a recess 8a of the lower part 8 of grip piece 6, and is held in engagement with a recess 2d in the upper portion 2 of cassette 1 by means of a spring 11.

Locking lever 10 is held by the light-shielding slider 9 covering the recess 8a and extends with a locking nose 10a through the light-shielding slider 9 into the recess 2d of the upper cassette portion 2.

Recess 8a moreover accommodates an operating member 12 which can be operated from outside through an opening 8b in the lower part 8 of grip piece 6. The operating member 12 is influenced by a spring 13 supported on the locking lever 10 and engages that end of locking lever 10 which faces away from the locking nose 10a.

The second locking device according to Figs. 1 and 6 to 8 comprises a locking arm 14 which is positively held and pivotably mounted in another recess 8c of the lower part 8 of grip piece 6 by mounting pins 14a arranged on either side of it.

Locking arm 14 is provided in its mounting area with a support 14c and has a flexible spring arm 14b molded to it, with both the support and the spring arm resting against light-shielding slider 9 which covers the recess 8a.

At the free end of locking arm 14, a locking nose 14d is arranged which engages a projection 3f provided in a recess 3d in the lower cassette portion 3. The recess 3d houses a sliding shoe 15 which is spring-biased in the direction of the arrow "F" by a spring 17. The sliding shoe 15 is provided with a step 15a which cooperates with locking nose 14d of locking arm 14 in a manner to be described further below. At its lower side, the sliding shoe 15 is provided with a color mark 15b visible from outside through an opening 3e in the lower cassette portion 3.

Sliding shoe 15 is held in its recess 3d by a light-shielding means not illustrated which is arranged above said shoe and, in a manner known per se, provides a light-tight seal of the slot for the extracted light-shielding slider 9.

Further provisions of a known type and not illustrated are made in the area of the grip piece 6 and the light-shielding slider 9 to prevent light from entering the interior of the cassette.

The sheet film cassette 1 is handled as follows:
After cassette 1 has been loaded with a sheet film 16 either automatically by means of a suitable unloading and reloading device or manually in a darkroom, the cassette is attached to a camera such as an X-ray camera.

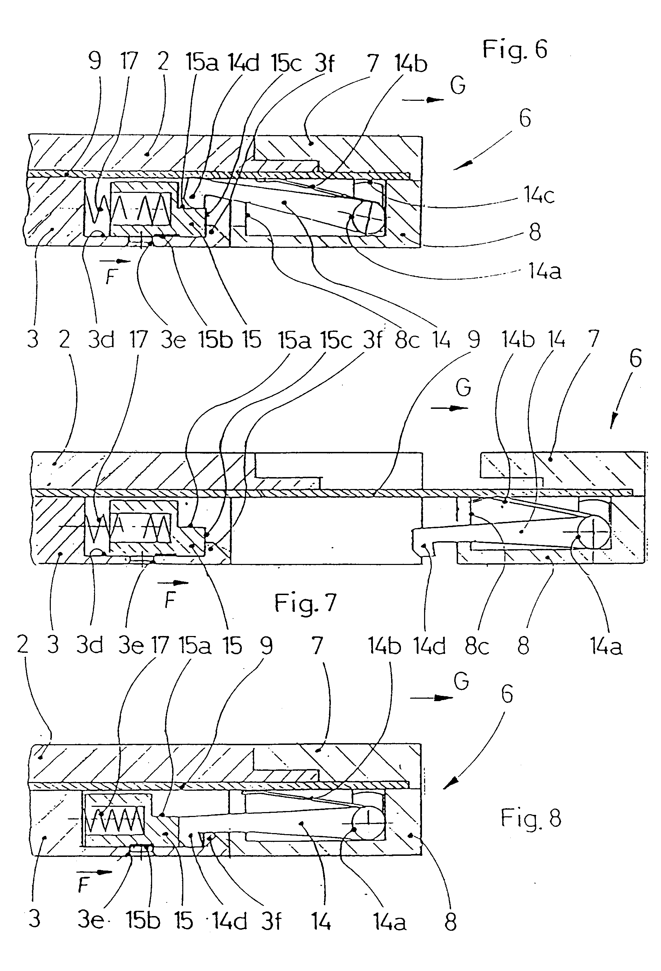

At that stage, the first locking device 10 to 13 assumes the locking position illustrated in Fig. 4 while the second locking device 14, 15 is in its release position shown in Fig. 6 in which locking arm 14 with its locking nose 14d is spring-biased to rest on step 15a of sliding shoe 15.

In order to render the cassette ready for exposure, the grip piece 6 is seized and the light-shielding slider 9 unlocked by means of the operating member 12. The light-shielding slider 9 thus released (see Fig. 5) is extracted in the direction of the arrow "G" and thereby clears the exposure window 2a of cassette 1.

While light-shielding slider 9 is being extracted by means of grip piece 6, locking nose 14d of locking arm 14 slides off step 15a of sliding shoe 15 and assumes the position illustrated in Fig. 7.

When the light-shielding slider 9 has been extracted, the sheet film 16 is exposed.

Upon completion of the exposure, the light-shielding slider 9 is shifted back into cassette 1 by means of grip piece 6, and the exposure window 2a is thus closed.

When the light-shielding slider 9 is slid into the cassette in opposition to the direction of the arrow "G", locking nose 14d of locking arm 14 slides onto projection 3f of recess 3d. During that movement, the locking nose 14d makes contact with the end face 15c of sliding shoe 15, urges said sliding shoe contrary to the direction of the arrow "F" and, under the action of spring arm 14b, locks behind projection 3f (see Fig. 8).

In the final position of light-shielding slider 9 and its grip piece 6 respectively, in which said slider is shifted into the cassette, locking lever 10, too, is once again received in recess 2d of the upper cassette portion 2 (see Fig. 4).

Should an attempt be made to open the light-shielding slider 9 again after an exposure has been made, the first locking device 10, 12 (Fig. 4) could be actuated. However, locking arm 14, 14d which is locked and cannot be influenced from outside, would prevent the light-shielding slider 9 from being erroneously extracted.

The second locking device 14, 15, 17 thus ensures that a sheet film cannot be exposed twice (double-exposure lock).

When the second locking device 14, 15, 17 (double-exposure lock) is operative, this is moreover signalized by the color mark 15b of sliding shoe 15, which is visible from outside through an opening 3e in the lower cassette portion 3.

At the end of the exposure and with light-shielding slider 9 in its covering position, cassette 1 is removed from the camera.

The exposed sheet film 16 is removed from cassette 1 either automatically in daylight in an unloading and reloading device or manually in a darkroom.

When the cassette 1 is opened for this purpose by operation of the closing device 5 and the upper cassette portion 2 is pivoted to its open position, grip piece 6, which engages the upper cassette portion 2 via the light-shielding slider 9, also moves away from the lower cassette portion 3 (shown in dash-dotted lines in Fig. 3).

At the same time, locking nose 14d of locking arm 14 leaves projection 3f and sliding shoe 15 so that sliding shoe 15 is able to slide, under the action of spring 17, in the direction of the arrow "F" until its step 15a is positioned beneath the locking nose 14d of locking arm 14.

The second locking device 14, 15 (double-exposure lock) has thus also been unlocked and, upon loading of another sheet film and closing of the cassette portions 2 and 3, assumes the position shown in Fig. 6.

Cassette 1 is now ready for exposure, which can also be ascertained from outside by the absence of the double-exposure lock signal (color mark 15b).

In order that it can be ascertained in the closed position of the sheet-film cassette 1 whether or not a sheet film has been loaded, cassette 1 is provided with a load-condition indicator.

The load-condition indicator comprises an indicator element 18 which is movable perpendicularly to the sheet-film support surface 3a. The indicator element 18 is guided in a sleeve 19 mounted in an opening 3g of the lower cassette portion 3 and under the action of its own weight slides in a bore 19a of sleeve 19, which opens towards the exterior. The inner wall of bore 19a is provided with a color mark 19b which is either visible from the exterior of the cassette or covered, depending on the position of the indicator element 18.

For light-sealing purposes the indicator element 18 and the sleeve 19 interlock in a labyrinth-type manner and are designed such that the indicator element 18 is movable to and fro over a distance "H".

The indicator element 18 is arranged on the lower cassette portion 3 which positions the sheet film 16 and opposite to the opening of the exposure window 2a. It is guided for movement over a distance "H" from a position, in which it is flush with the outer surface of the lower cassette portion 3, to a position, in which it extends by a limited amount into the opening of exposure window 2a.

The cassette 1 is loaded with a sheet film 16 when it is in the position in which the lower cassette portion is at the bottom as shown in Fig. 3. In this position, the indicator element 18 is flush with the outer surface of the lower cassette portion 3 and does not extend beyond the support surface 3a of sheet film 16.

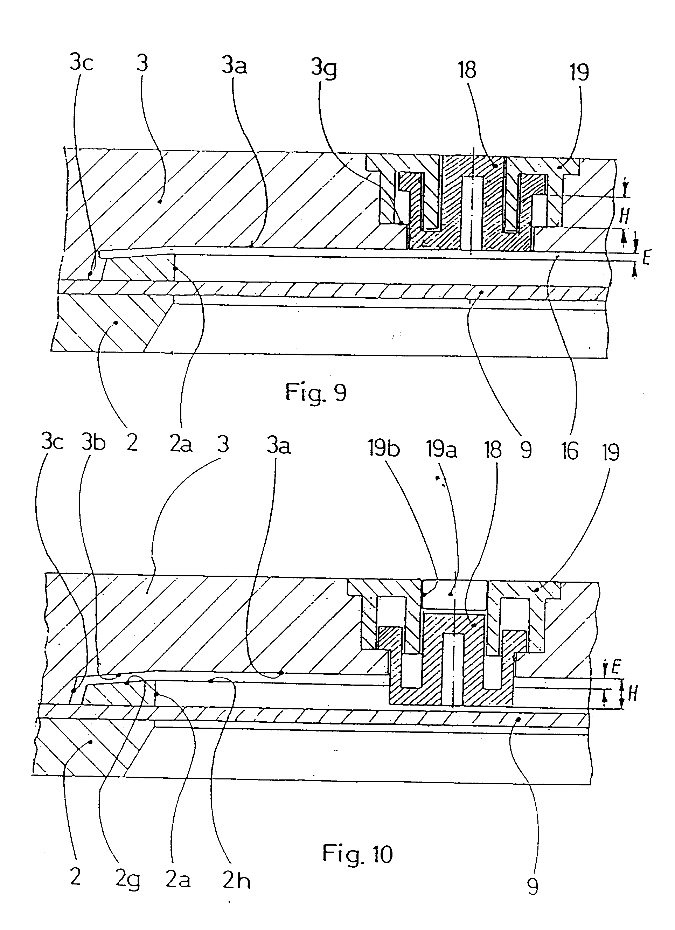

In order to ascertain whether or not a sheet film 16 is loaded in a closed cassette 1, the cassette 1 is turned around so that the lower cassette portion 3 is positioned at the top as illustrated in Fig. 9. With a sheet film 16 loaded, the indicator element 18 rests against sheet film 16 as shown in Fig. 9 and thus cannot move. This "cassette loaded" condition is indicated by the flush alignment of the indicator element 18 with the outer cassette surface and by the fact that color mark 19b is not visible.

If the loading condition is checked and there is no sheet film loaded in cassette 1, indicator element 18 drops by its own weight by the distance "H" downwardly to the position illustrated in Fig. 10 in which is extends into the opening of exposure window 2a. This clears color mark 19b so that it can be seen from outside that no sheet film is present in cassette 1.

When the indicator element 18 drops inwardly by the distance "H", bore 19a is partially cleared and thus a recess produced on the outer cassette surface which can be sensed. This offers the opportunity of ascertaining the loading condition even in a darkroom without the cassette 1 having to be opened.

The indicator means 3a and 15b of the double-exposure lock 14 and 15 and the load-condition indicator 18, 19 are both noticeable on the exterior of the lower cassette portion 3 and are, moreover, associated with the same cassette end (see Fig. 1). This facilitates handling of the cassette 1, because the loading condition - cassette empty or loaded - and the exposure condition - sheet film exposed or unexposed - can be ascertained at the same side of the cassette.

Moreover, the operating member 12 for the first locking device 10, 12 is also arranged on that side.

## Claims

1. A sheet film cassette (1) comprising a first and a second cassette portion (2, 3) connected by a hinge (4), in the first portion (2) an exposure window (2a) and a light-shielding slider (9) with a grip piece (6) being arranged for shifting movement and in the second portion (3) support means (3a, 3b) being provided for positioning a sheet film (16), two locking devices (10, 14) associated with the light-shielding slider and arranged in the grip piece thereof and adapted for engagement with one of the cassette portions, one of said locking devices (14) comprising a locking arm (14) mounted to the grip piece (6) and being adapted for locking engagement with the second cassette portion (3) and for being automatically reset when the cassette portions (2, 3) are pivoted to their open position, **characterized in that** the locking arm (14) is rigidly connected with said grip piece in the direction of its movement and spring-biased into engagement with a projection (3f) of the second cassette portion (3), and in that the second cassette portion (3) comprises a control element (15) which is movable in the direction of the shifting movement of the slider (9), spring-biased into a locking path of the locking arm (14) to prevent locking in its reset position, and movable away from the locking path of the locking arm (14) to enable locking in its locking position.

2. A sheet-film cassette according to claim 1, characterized in that the locking arm (14) is positively held and pivotably mounted at one end in the grip piece (6) by means of mounting pins (14a) molded to it on either side and in that the locking arm (14) comprises at its other end a locking nose (14d) adapted for engagement with the associated cassette portion (3).

3. A sheet-film cassette according to claim 1 or 2, characterized in that the control element (15) is guided in a recess (3d) adjacent to the projection (3f) in the second cassette portion (3), and in that the locking arm (14) is mounted in a recess (8c) of a lower part (8) of the grip piece (6) which consists of two parts (7, 8).

4. A sheet-film cassette according to claim 3, characterized in that the light-shielding slider (9) is secured between an upper part (7) and the lower part (8) of the grip piece (6) and covers the recess (8c) and the locking arm (14) located therein.

5. A sheet-film cassette according to any of claims 1 to 4, characterized in that a spring arm (14b) is molded to the locking arm (14) for biasing the locking arm into engagement with the projection (3f).

6. A sheet-film cassette according to any of claims 1 to 5, characterized in that the control element (15) comprises an end face (15c) arranged within the path of shifting movement of the locking arm (14) and continuing in a step (15a).

7. A sheet-film cassette according to any of claims 1 to 6, characterized in that a color mark (15b) is arranged on a lower side of the control element (15), said color mark being visible through an opening (3e) on the outer side of the cassette, when the control element is in its locking position.

## Patentansprüche

1. Planfilmkassette (1) mit einer ersten und zweiten durch ein Scharnier (4) verbundenen Kassettenhälfte (2, 3), an deren erster Hälfte (2) ein Belichtungsfenster (2a) und ein verschiebbarer Lichtschutzschieber (9) mit Griffleiste (6) angeordnet sind und an deren zweiter Hälfte (3) Auflageflächen (3a, 3b) zur Positionierung eines Planfilms (16) vorgesehen sind, mit zwei dem Lichtschutzschieber zugeordneten und an dessen Griffleiste angeordneten Verriegelungsvorrichtungen (10, 14), die mit einer Kassettenhälfte in Eingriff gelangen, wobei eine der Verriegelungsvorrichtungen einen an der Griffleiste (6) befestigten Verriegelungsarm (14) aufweist und mit der zweiten Kassettenhälfte (3) verriegelbar ist und beim Aufschwenken der Kassettenhälften selbsttätig zurückgestellt wird, **dadurch gekennzeichnet,** daß der Verriegelungsarm (14) in seiner Bewegungsrichtung starr mit der Griffleiste verbunden ist und einen Vorsprung (3f) an der zweiten Kassettenhälfte (3) federbeaufschlagt hintergreift, und daß die zweite Kassettenhälfte (3) ein Steuerteil (15) aufweist, das in der Verschieberichtung des Lichtschutzschiebers (9) bewegbar ist und federbeaufschlagt in den Verriegelungsweg des Verriegelungsarmes (14) ragt, um eine Verriegelung in dessen Freigabeposition zu verhindern, und das aus dem Verriegelungsweg herausbewegbar ist, um ein Verriegeln zu ermöglichen.

2. Planfilmkassette nach Anspruch 1, dadurch gekennzeichnet, daß der Verriegelungsarm (14) an seinem einen Ende mittels beidseitig angeformter Lagerzapfen (14a) formschlüssig an der Griffleiste (6) gehalten und schwenkbar gelagert ist und daß der Verriegelungsarm (14) an seinem anderen Ende eine mit der zugeordneten Kassettenhälfte (3) in Eingriff bringbare Verriegelungsnase (14d) aufweist.

3. Planfilmkassette nach Anspruch 1 oder 2, dadurch gekennzeichnet, daß das Steuerteil (15) in einer an den Vorsprung (3f) angrenzenden Vertiefung (3d) des zweiten Kassettenteils (3) geführt ist und daß der Verriegelungsarm (14) in einer Aussparung (8c) eines Unterteils (8) einer zweiteiligen (7, 8) Griffleiste (6) gelagert ist.

4. Planfilmkassette nach Anspruch 3, dadurch gekennzeichnet, daß der Lichtschutzschieber (9) zwischen einem Oberteil (7) und dem Unterteil (8) der Griffleiste (6) befestigt ist und die Aussparung (8c) und den darin angeordneten Verriegelungsarm (14) überdeckt.

5. Planfilmkassette nach einem der Ansprüche 1 bis 4, dadurch gekennzeichnet, daß an den Verriegelungsarm (14) ein Federarm (14b) angeformt ist, derart, daß der Verriegelungsarm den Vorsprung (3f) federbeaufschlagt hintergreift.

6. Planfilmkassette nach einem der Ansprüche 1 bis 5, dadurch gekennzeichnet, daß das Steuerteil (15) eine im Verschiebeweg des Verriegelungsarmes (14) angeordnete Stirnfläche (15c) und einen daran anschließenden stufenförmigen Absatz (15a) aufweist.

7. Planfilmkassette nach einem der Ansprüche 1 bis 6, dadurch gekennzeichnet, daß an der Unterseite des Steuerteils (15) eine Farbmarkierung (15b) angeordnet ist, die durch eine Öffnung (3e) an der Kassettenaußenseite sichtbar ist, wenn sich das Steuerteil in seiner Verriegelungsstellung befindet.

## Revendications

1. Cassette (1) pour feuille de film comprenant une première et une seconde partie (2, 3) reliées entre elles par une charnière (4), la première partie (2) étant munie d'une fenêtre d'exposition (2a) et d'un écran coulissant (9) pourvu d'une pièce (6) de préhension agencée de manière à permettre le déplacement et la seconde partie (3) étant munie de moyens de support (3a, 3b) permettant de positionner la feuille de film (16), deux dispositifs de verrouillage (10, 14) associés à l'écran coulissant et agencés dans la pièce de préhension et adaptés de manière à venir au contact de l'une des parties de la cassette, l'un (14) des dispositifs de verrouillage comprenant un bras de blocage (14) monté sur la pièce de préhension (6) et étant adapté, d'une part pour venir en contact de verrouillage avec la seconde partie (3) de la cassette et, d'autre part, pour être remis automatiquement à la position d'origine lorsque les parties (2, 3) de la cassette sont basculées dans leur position d'ouverture, cassette caractérisée en ce que le bras (14) est relié à ladite pièce de préhension de manière fixe par rapport à la direction de déplacement de ladite pièce de préhension et est sollicité par un ressort de manière à venir coopérer avec une projection (3f) de la seconde partie (3) de la cassette, et en ce que la seconde partie (3) de la cassette comprend un élément de contrôle (15) mobile dans la direction de déplacement de l'écran coulissant (9), sollicité par un ressort pour venir en position de blocage du bras (14) de blocage pour empêcher son verrouillage lorsqu'il est dans sa position d'origine et mobile de manière à s'éloigner de ladite position de blocage du bras (14) de blocage pour permettre que ce dernier soit disposé dans sa position de blocage.

2. Cassette selon la revendication 1, caractérisée en ce que le bras de blocage (14) est maintenu fermement par une extrémité de manière à pouvoir basculer par rapport à la pièce de préhension (6) grâce à des ergots (14a) moulé de part et d'autre du bras et en ce que le bras (14) de blocage comprend à son autre extrémité un doigt de verrouillage (14d) susceptible de venir en prise avec la partie (3) de cassette associée.

3. Cassette selon la revendication 1 ou 2, caractérisée en ce que l'élément de contrôle (15) est guidé dans un logement (3d) situé au voisinage de la projection (3f) disposée dans la seconde partie (3) de la cassette, et en ce que le bras (14) de blocage est disposée dans une niche (8c) d'une partie inférieure (8) de la pièce de préhension (6) qui est réalisée en deux parties (7, 8).

4. Cassette selon la revendication 3, caractérisée en ce que l'écran coulissant (9) est fixé entre la partie supérieure (7) et la partie inférieure (8) de la pièce de préhension (6) et recouvre la niche (8c) et le bras (14) de blocage qu'elle contient.

5. Cassette selon l'une quelconque des revendications 1 à 4, caractérisée en ce qu'une lame ressort (14b) est moulée sur le bras (14) de blocage pour solliciter le bras de blocage à venir au contact de la projection (3f).

6. Cassette selon l'une quelconque des revendications 1 à 5, caractérisée en ce que l'élément de contrôle (15) comprend une face d'extrémité (15c) agencée de manière à être disposée sur la trajectoire de déplacement du bras (14) de blocage, cette face se prolongeant par une marche (15a).

7. Cassette selon l'une quelconque des revendications 1 à 6, caractérisée en ce que l'élément de contrôle (15) comprend à sa partie inférieure une marque colorée (15b) visible, au travers d'un orifice (3e) fait dans la partie externe de la cassette, lorsque ledit élément de contrôle est dans sa position de blocage.
